**Europäisches Patentamt**

**European Patent Office**

**Office européen des brevets**

(19)

(11) Veröffentlichungsnummer: **0 201 612**
**A1**

(12) ## EUROPÄISCHE PATENTANMELDUNG

(21) Anmeldenummer: **85105825.5**

(22) Anmeldetag: **11.05.85**

(51) Int. Cl.⁴: **A 01 B 49/02**
**A 01 B 29/00**

(43) Veröffentlichungstag der Anmeldung:
**20.11.86** Patentblatt **86/47**

(84) Benannte Vertragsstaaten:
**AT DE FR GB NL**

(71) Anmelder: **Rabewerk Heinrich Clausing**

**D-4515 Bad Essen 1(DE)**

(72) Erfinder: **Becker, Ignaz, Dipl.-Ing.**
**In der Hegge 2**
**D-4994 Preussisch Oldendorf(DE)**

(72) Erfinder: **Bohnenkamp, Wilfried, Dipl.-Ing.**
**Klusring 25**
**D-4515 Bad Essen 1(DE)**

(74) Vertreter: **Schlee, Richard et al,**
**Patentanwälte Dipl.-Ing. R. Schlee Dipl.-Ing. A. Missling**
**Bismarckstrasse 43**
**D-6300 Giessen 1(DE)**

(54) **Nachlaufgerät für Drehpflüge.**

(57) Ein Nachlauf-Zusatzgerät (3) besteht aus einer Walze (21) und einem weiteren Zusatz-Werkzeug, z. B. einer Walze (26). Bei einer Rückwärtsbewegung des Nachlauf-Zusatzgerätes (3) kippt die Walze (26) von einer Arbeitsstellung, in der Träger (28) für die Walze (26) an Anschlägen (32) anliegen, in eine Rangierstellung um, in der die Walze (26) auf dem Boden geschleppt wird.

Durch den Übergang des Zusatz-Werkzeuges (26) in eine Schleppstellung wird das Wenden des Gesamtgerätes bei Umkehr der Fahrtrichtung wesentlich erleichtert.

*Fig.1*

EP 0 201 612 A1

Dipl.-Ing. Richard Schlee
Dipl.-Ing. Arne Miesling

h300 Lahn-Giessen 1    10.5.1985
Bismarckstrasse 43
Telefon: (0641 0201612
S/B 14.900

RABEWERK  Heinrich Clausing, 4515 Bad Essen 1

## Nachlaufgerät für Drehpflüge

Die Erfindung bezieht sich auf ein Nachlaufgerät für Drehpflüge, mit mindestens einer vorderen Hauptwalze, insbesondere einer Packerwalze, die in einem ersten Gestell gelagert ist und einem Nachlauf-Zusatzgerät, das eine erste Zusatzwalze aufweist, die in einem zweiten Gestell gelagert ist, wobei das zweite Gestell mit dem ersten Gestell mittels einer Deichsel gelenkig verbunden ist, die so geformt und angeordnet ist, daß beim Wechseln der Arbeitsrichtung des Nachlaufgerätes die Deichsel über die Hauptwalze und das erste Gestell hinwegschwenken kann.

Nachlaufgeräte dieser Art dienen zur weiteren Bearbeitung des Bodens nach dem Pflügen. Durch das Anhängen des Nachlaufgerätes an den Pflug ist es nicht erforderlich, den Acker nach dem Pflügen abermals zu befahren, so daß ein zusätzlicher zeitaufwendiger Arbeitsgang erspart wird und unerwünschte Bodenverdichtungen vermieden werden. Vor dem Wenden des Pfluges am Ende des Ackers wird das Nachlaufgerät abgehängt und nach dem Wenden wieder angehängt. Die Kupplung erfolgt über Fanghaken, so daß der Schlepperfahrer zum An- und Abhängen des Nachlaufgerätes nicht absteigen muß.

Beim Wenden des Schleppers wird das abgestellte Nachlaufgerät naturgemäß nicht ebenfalls gewendet. Man hat deshalb früher das Problem dadurch gelöst, daß das Nachlaufgerät bei entgegengesetzten Arbeitsrichtungen gleiche Arbeitseffekte erzielt, zu welchem Zweck das Gerät symmetrisch ausgebil-

0201612

det wurde, z.B. wurden beiderseits einer Packerwalze Krümelwalzen angeordnet. Dies hatte bei manchen Bearbeitungsfällen den Nachteil, daß die vorauslaufende Krümelwalze die Erde zusammenschiebt und nutzlos mitläuft. Dieser Nachteil ist bei Nachlaufgeräten der eingangs genannten Art (DE-GM 82 30 833, DE-GM 83 25 102) vermieden, da eine während der Arbeit nur nachlaufende Zusatzwalze beim Wendevorgang um die Hauptwalze schwenken kann, so daß sie auch nach dem Wenden hinter der Hauptwalze läuft.

Die bekannten Nachlaufgeräte arbeiten zufriedenstellend, wenn nur eine Zusatzwalze vorgesehen ist, weil sich eine Zusatzwalze gegen die Kurvenfahrt nicht so stark sperrt, daß der Wendevorgang unzuträglich erschwert wird. Der Wendevorgang kann jedoch nicht mehr befriedigend ablaufen, wenn hinter der Zusatzwalze ein weiteres Bodenbearbeitungsgerät, z.B. eine Walze oder eine Egge, angeordnet ist. Bei einem bekannten Nachlaufgerät (DE-GM 83 05 335), bei dem das Zusatzgerät eine Egge ist, ist das Zusatzgerät an einem Rahmen aufgehängt, der verhindert, daß die Egge beim Wendevorgang in den Boden gedrückt wird. Bei einer solchen Aufhängung des Zusatzgerätes wird das Gewicht des Rahmens nicht auf das Zusatzgerät übertragen. Eine Belastung des Zusatzgerätes ist jedoch im allgemeinen erwünscht.

Der Erfindung liegt die Aufgabe zugrunde, ein Nachlaufgerät der eingangs genannten Art so auszubilden, daß verbesserte Bodenbearbeitungsergebnisse erzielt werden, wobei der Wendevorgang ohne Schwierigkeiten durchführbar sein soll.

Zur Lösung dieser Aufgabe werden zwei auf demselben Lösungsprinzip beruhende Lösungen vorgeschlagen. Das gemeinsame Lösungsprinzip besteht darin, daß durch Kräfte, die beim Zurückstoßen des Zusatzgerätes entstehen, weitere Zusatzwerkzeuge in eine Stellung verschwenkt werden, in der sie den Rangiervorgang nicht stören.

Die erste Lösung der Erfindungsaufgabe, die im Anspruch 1 angegeben ist, ist dadurch gekennzeichnet, daß das Nachlauf-Zusatzgerät mindestens ein vor oder hinter der ersten Zusatzwalze angeordnetes weiteres Zusatz-Werkzeug aufweist, das am zweiten Gestell gelenkig befestigt ist und in eine Arbeitsstellung, in der es an einem Anschlag anliegt und in eine Rangierstellung schwenkbar ist, in der das Zusatz-Werkzeug vom Boden abgehoben ist oder nur noch mit seinem Eigengewicht auf dem Boden aufliegt.

Bei einem so ausgebildeten Nachlaufgerät wird durch die Anordnung mindestens eines weiteren Zusatz-Werkzeuges ein verbessertes Arbeitsergebnis erzielt. Beim Zurückstoßen des Nachlaufgerätes, wie es beim Rangieren vorkommt, wird das weitere Zusatz-Werkzeug durch die entgegengesetzt zu der Richtung, die während der Arbeit auftritt, wirkenden Kräfte in die Rangierstellung verschwenkt, wonach das weitere Zusatz-Werkzeug nur noch auf dem Boden geschleppt wird, also allenfalls mit seinem Eigengewicht auf dem Boden aufliegt, was ein Rangieren befriedigend zuläßt.

Die im Anspruch 2 gekennzeichnete zweite Lösung der Erfindungsaufgabe ist dadurch gekennzeichnet, daß das zweite Gestell relativ zur Deichsel um eine horizontale Achse schwenkbar ist und vor der ersten Zusatzwalze mindestens ein weiteres Zusatz-Werkzeug angeordnet ist, wobei die Ausschwenkung des zweiten Gestells nach hinten durch einen Anschlag begrenzt ist und bei einer Verschwenkung des zweiten Gestells nach vorn das weitere Zusatz-Werkzeug angehoben wird.

Auch bei dieser Lösung bewirken die bei einer Rückwärtsfahrt auf das Nachlauf-Zusatzgerät wirkenden Kräfte eine solche Entlastung des weiteren Zusatz-Werkzeuges, daß ein Rangieren befriedigend möglich ist, wobei in diesem Fall sogar ein Abheben des weiteren Zusatz-Werkzeuges vom Boden stattfindet.

Bei beiden Lösungen kann ein weiteres Zusatz-Werkzeug als Walze (Anspruch 3) oder als Egge (Anspruch 4) ausgebildet sein. Auch weitere Werkzeugvarianten, die zur Bearbeitung gepflügten Bodens geeignet sind, sind möglich.

Bei einer Anordnung des Schwenkpunktes gemäß Anspruch 5 wird eine stabile Lage in der Arbeitsstellung erhalten. Dies ist eine besonders vorteilhafte Verbesserung bei als Walze ausgebildetem weiterem Zusatz-Werkzeug, da solche Werkzeuge eventuell nach vorne umkippen könnten. Weniger wichtig ist eine Lage des Schwenkpunktes gemäß Anspruch 5 bei als Egge ausgebildetem weiterem Zusatz-Werkzeug, da bei Eggen stets eine relativ große, nach hinten wirkende Kraft vorhanden ist, die die Zusatz-Werkzeuge sicher in ihrer Arbeitslage hält.

Der Anschlag für die Arbeitsstellung kann verstellbar sein (Anspruch 6), wodurch eine optimale Einstellung möglich ist, nämlich eine Einstellung, mit der eine ausreichend stabile Lage gerade noch erreicht wird, wodurch wiederum erreicht wird, daß das Verschwenken in die Rangierstellung schon bei geringen Kräften erreicht wird. Außer dem Anschlag für die Arbeitsstellung ist vorzugsweise auch ein Anschlag für die Rangierstellung vorgesehen (Anspruch 7). Man vermeidet dadurch ein zu weites Umkippen des weiteren Zusatz-Werkzeuges, was den Vorteil hat, daß das weitere Zusatz-Werkzeug nahe bei der ersten Zusatzwalze angeordnet werden kann, da eine Kollision durch den Anschlag vermieden wird.

Eine höhenverstellbare Anordnung der weiteren Zusatz-Werkzeuge (Anspruch 8) gestattet eine Optimierung der Aufhängung für die vorgesehene Funktion und auch eine Veränderung des Andruckes des weiteren Zusatz-Werkzeuges auf den Boden. Wenn mehrere Zusatz-Werkzeuge vorgesehen sind, werden diese vorteilhafterweise gemäß Anspruch 9 angeordnet. Diese Anordnung ermöglicht die Abstimmung der Höhenlage der mehreren Zusatzwerkzeuge aufeinander. Eine Abstimmung der Höhenlage solcher mehrerer Zusatzwerkzeuge aufeinander wird besonders zweckmäßig durch eine konstruktive Ausführung gemäß Anspruch 10 ermöglicht.

Auch bei der zweiten Lösung der Erfindungsaufgabe (Anspruch 2) ist es vorteilhaft, den Anschlag gemäß Anspruch 11 verstellbar auszubilden. Auch bei dieser Anordnung ist vorzugsweise ein weiterer Anschlag für die Rangierstellung vorgesehen (Anspruch 12). Man vermeidet dadurch ein Umkippen des zweiten Gestells und damit unliebsame Betriebsstörungen. Das weitere Zusatz-Werkzeug ist bei der zweiten Lösung der Erfindungsaufgabe vorzugsweise relativ zu der ersten Zusatzwalze höhenverstellbar (Anspruch 13). Hierdurch ist wiederum eine Abstimmung der Höhenlage der Werkzeuge des Nachlauf-Zusatzgerätes aufeinander möglich und damit auch eine Veränderung des individuellen Anpreßdruckes dieser Werkzeuge auf den Boden.

In der Zeichnung sind Ausführungsbeispiele der Erfindung dargestellt. Hierbei zeigen die Fig. 1 bis 5 Ausführungsbeispiele gemäß der ersten Lösung der Erfindungsaufgabe und Fig. 6 ein Ausführungsbeispiel gemäß der zweiten Lösung der Erfindungsaufgabe. Im einzelnen sind

Fig. 1 eine Seitenansicht eines Nachlaufgerätes in Richtung des Pfeiles I in Fig. 2,

Fig. 2 eine Draufsicht auf das Gerät nach Fig. 1 in Richtung des Pfeiles II in Fig. 1,

Fig. 3 eine Seitenansicht des hinteren Teiles eines Nachlaufgerätes gemäß einer zweiten Ausführungsform der Erfindung,

- 6 -

0201612

Fig. 4    eine Seitenansicht des hinteren Teiles eines
          Nachlaufgerätes gemäß einer dritten Ausführungsform der Erfindung,

Fig. 5    eine Seitenansicht des hinteren Teiles eines
          Nachlaufgerätes gemäß einer vierten Ausführungsform der Erfindung und

Fig. 6    in schematischer Darstellung eine Seitenansicht eines Nachlaufgerätes gemäß der zweiten
          Lösung der Erfindungsaufgabe.

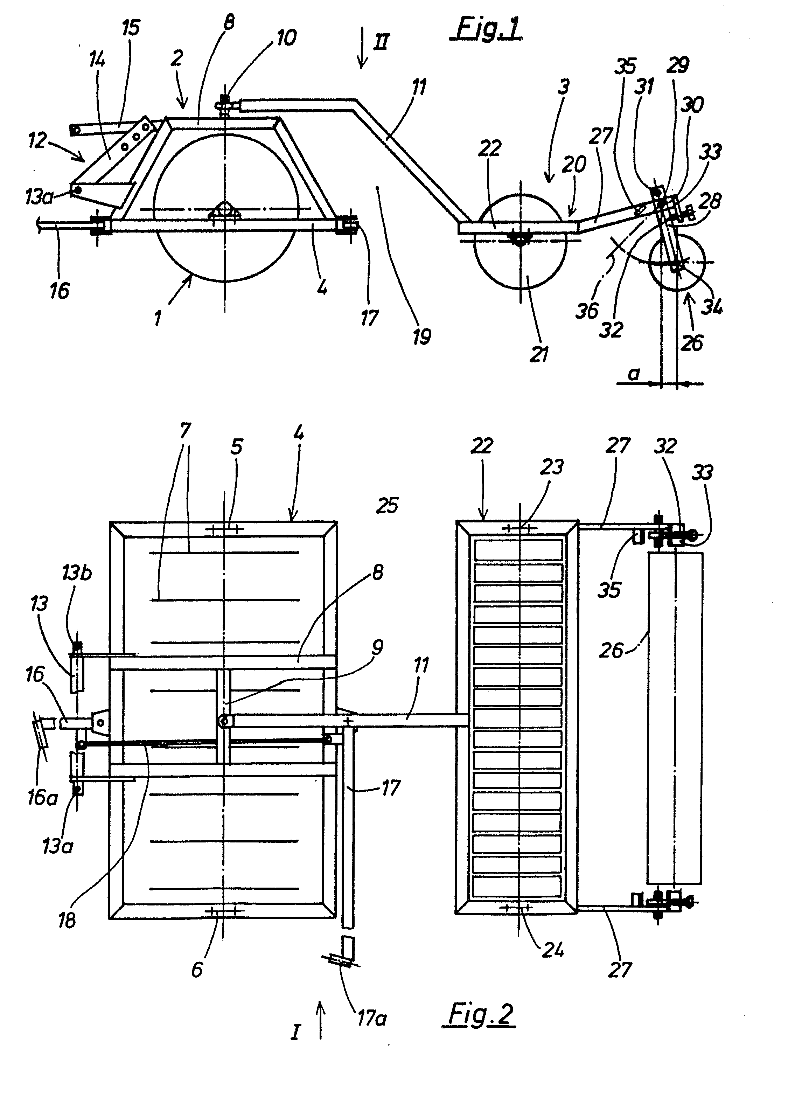

Das Nachlaufgerät nach den Fig. 1 und 2 hat eine vordere
Hauptwalze 1, die in einem ersten Gestell 2 gelagert ist
und ein insgesamt mit 3 bezeichnetes Nachlauf-Zusatzgerät 3.

Das erste Gestell 2 hat einen Rahmen 4, an dessen Enden sich
Lager 5, 6 für die Achse der Hauptwalze befinden. Auf  der
Achse können z.B. unabhängig voneinander drehbare Scheiben
7 gelagert sein, die einen Ring von keilförmigem Querschnitt
haben, wobei der Grat des Keilquerschnittes am äußeren Umfang
liegt. Solche Scheibenanordnungen bezeichnet man als Untergrundpacker.

Die Hauptwalze 1 ist von einer Brücke 8 überbrückt, die fest
mit den langen Rahmenseiten verbunden ist. Die Brücke 8 hat
eine obere Traverse 9, an der mittels eines Kugelgelenkes 10
die Deichsel 11 des Nachlauf-Zusatzgerätes angehängt ist. An
vorderen Pfeilern der Brücke 8 ist ein insgesamt mit 12 bezeichneter Dreipunktturm befestigt. Dieser hat eine untere
Querachse 13 mit Zapfen 13a, 13b für die Verbindung mit den
Unterlenkern eines Schlepper-Dreipunktgestänges und einen nach
oben ragenden Turm 14, der in zurückgeklappter Stellung gezeichnet ist. In aufgerichteter Stellung wird der Turm 14 mit
einer Strebe 15 verbunden, wonach das Gerät an das Dreipunktgestänge eines Schleppers angebaut werden kann, z.B. wenn das Gerät nicht als Nachlaufgerät gebraucht wird oder wenn das Gerät nur transportiert werden soll.

An den Längsseiten des Rahmens 4 befinden sich Stangen 16, 17 mit Fanghaken 16a, 17a. Die vordere Stange 16 ist in Zugstellung gezeigt und die hintere Stange 17 in Fangstellung. Die beiden Zugstangen 16, 17 sind über ein Zwischenglied 18 miteinander verbunden, wodurch erreicht wird, daß dann, wenn eine Stange von der Fangstellung in die Zugstellung gezogen wird, die jeweils andere Stange von der Zugstellung in die Fangstellung bewegt wird.

Zwischen der Deichsel 11 des Nachlauf-Zusatzgerätes 3 und dem ersten Gestell 2 befindet sich ein so großer Zwischenraum 19, daß das erste Gestell 2 unter der Deichsel 11 hindurchschwenken kann. Es ist also auch eine Stellung möglich, bei der, in Fig. 2 gesehen, das Gestell 2 um 90° verdreht ist, ohne daß eine Kollision mit der Deichsel 11 besteht.

Das Nachlauf-Zusatzgerät 3 hat ein zweites Gestell 20, in dem eine erste Zusatzwalze 21 gelagert ist. Das zweite Gestell 20 hat ebenfalls einen rechteckigen Rahmen 22, an dessen Enden sich Lager 23, 24 für eine Achse der Walze 21 befinden. Die Walze 21 kann z.B. eine sogenannte Croskill-Walze mit einzelnen, unabhängig voneinander drehbaren Zahnscheiben sein. Erfindungsgemäß befindet sich am zweiten Gestell 20 auch ein weiteres Zusatz-Werkzeug 26, z.B. eine Krümelwalze, die so aufgehängt ist, daß sie bei einem Zurückschieben des Nachlauf-Zusatzgerätes nach vorne umgeklappt wird. Die Aufhängung ist wie folgt beschaffen.

Das zweite Gestell 22 hat nach hinten ragende Verlängerungen 27, die ausgehend vom Rahmen 22 ansteigend verlaufen (siehe Fig. 1). An jeder Verlängerung 27 ist eine Stange 28 mittels eines Gelenkbolzens 29 schwenkbar gelagert. In jeder Stange 28 befinden sich zwei Löcher 30, 31, von denen eines wahlweise benutzt wird, im dargestellten Fall das Loch 30. Dies gestattet eine Höhenverstellung der Stangen 28.

In der Arbeitsstellung, die in der Zeichnung dargestellt ist, liegt jede Stange 28 an einer Anschlagschraube 32 an, die in einem Ansatz 33 der Verlängerung 27 verschraubbar ist. Die Anordnung des Anschlages ist so, daß zwischen dem Gelenkbolzen 29 und der Achse 34 der Walze 26 ein Abstand a besteht.

An jeder Verlängerung 27 befindet sich auch ein Anschlag 35, der die Schwenkung der Stangen 28 nach vorne begrenzt. Die vorderste Stellung ist durch eine strichpunktierte Linie 36 angedeutet.

Das Gerät arbeitet wie folgt. Während der Arbeit besteht die Situation nach den Fig. 1 und 2. Das Gerät bewegt sich nach links, wobei es an der Stange 16 gezogen wird. Die Packerwalze 1 zerkleinert grobe Schollen, die ein vorauslaufender Pflug, der das Gerät insgesamt zieht, aufgeworfen hat und beseitigt durch Druck Hohlräume im Untergrund. Die Deichsel 11 nimmt das Nachlauf-Zusatzgerät 3 mit. Die Stangen 27 liegen an den Anschlagschrauben 32 an. Diese Anlage wird aufrechterhalten durch Arbeitskräfte, die die Walze 26 um die Gelenkbolzen 29 entgegen zum Uhrzeigersinn (in Fig. 1 gesehen) zu verschwenken versuchen. Durch den Abstand a wird eine stabile Lage der Walze 26 erreicht.

Wenn das Gerät am Ende einer Bahn angelangt ist, wird es abgekoppelt, wozu ein Absteigen des Schlepperfahrers nicht nötig ist, da sich der Fanghaken 16a beim Wendevorgang selbsttätig löst. Das gesamte Gerät bleibt zunächst auf dem Acker stehen, bis der Schlepper samt dem daran angebauten Pflug gewendet hat und in der Gegenrichtung an das Gerät heranfährt.

Die Kupplung mit dem Pflug erfolgt nun über den Fanghaken 17a, wonach das erste Gestell 2 in Fig. 2 gesehen schräg nach rechts unten gezogen wird. Es fährt dabei unter der Deichsel 11 hindurch. Auf die Deichsel wird nun Druck ausgeübt, durch den das Nachlauf-Zusatzgerät rückwärts geschoben wird. Hierbei wirken auf die Walze 26 Bodenkräfte ein, die die Stangen 28, in Fig. 1 gesehen, im Uhrzeigersinn verschwenken. Dabei gelangt zunächst die Achse 34 unter die Gelenke 29, wonach die Walze vollends nach vorne umkippt und auf dem Boden geschleppt wird. Die Auflagekraft der Walze 26 ist dabei relativ gering, so daß die Walze 26 den folgenden Schwenkvorgang der ersten Zusatzwalze 21 nicht nennenswert behindert. Diese kann also ohne Schwierigkeiten abrollen, insbesondere dann, wenn die Walze 21 aus einzelnen Ringen besteht, z.B. als Croskill-Walze ausgebildet ist.

Nach dem Wendevorgang wird die Deichsel 11 wieder auf Zug beansprucht und auf die Walze 26 wirken Bodenkräfte ein, die eine Verschwenkung der Stangen 28 entgegen dem Uhrzeigersinn bewirken (in Fig. 1 gesehen). Hierbei wird der Kulminationspunkt überwunden, d.h. der Punkt, in dem sich die Walzenachse 34 unter den Gelenken 29 befindet, und die Stangen 28 gelangen wieder in ihre stabile gezeichnete Stellung.

Ein zu weites Verschwenken der Stangen 28 wird durch die Anschläge 35 verhindert, die jedoch nicht immer erreicht werden müssen. Insbesondere wird auch ein Umschlagen der Walze 26 vermieden.

Nach dem Wenden ist das Nachlauf-Zusatzgerät 3 um 180° gedreht, das erste Gestell 2 hingegen wurde nicht gewendet, sondern lediglich in anderer Richtung gezogen, wobei sich naturgemäß die Drehrichtung der Packerwalze 1 relativ zum ersten Gestell 2 ändert.

Die Anschlagschrauben 32 und die Lochreihen 30, 31 können ausgenutzt werden, um die Arbeitstiefe der Walze 26, die vorzugsweise als Krümelwalze ausgebildet ist, zu verändern. Bei weiterem Durchschrauben der Anschlagschrauben 32 durch die Ansätze 33 wird die Arbeitstiefe vergrößert, ebenso beim Übergang vom Loch 30 zum Loch 31.

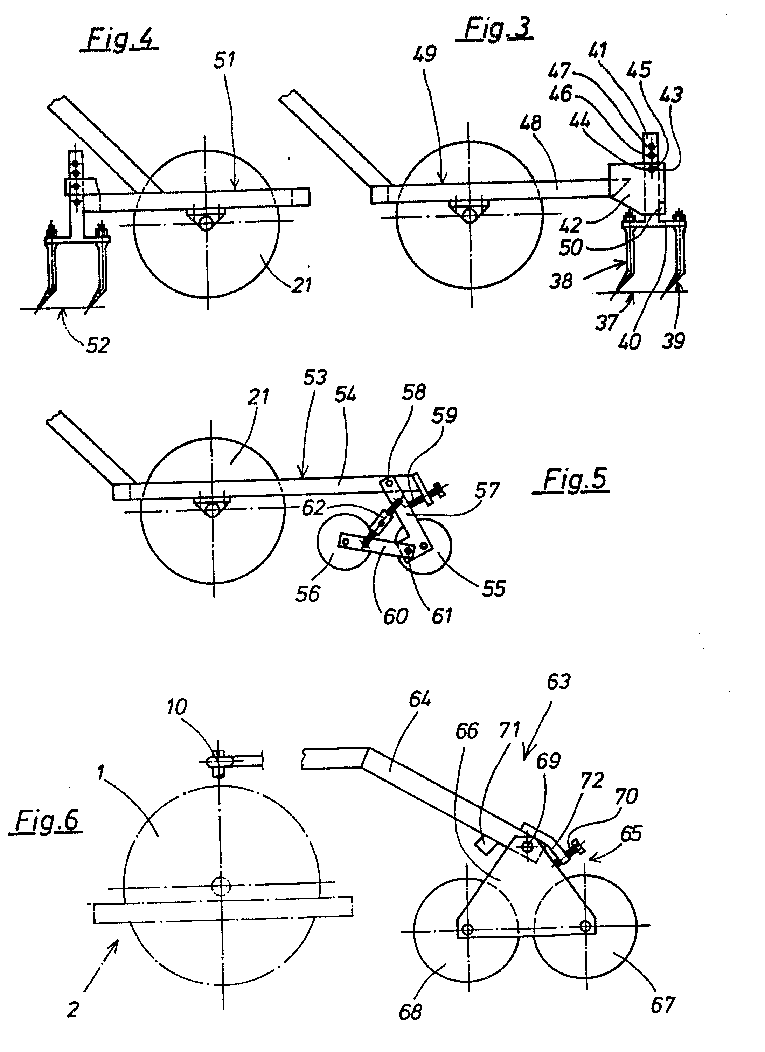

Bei der Ausführungsform nach Fig. 3 ist das weitere Zusatz-Werkzeug 37 als Egge mit zwei Zinkenreihen 38, 39 ausgebildet. Die Zinken sind an einem Zinkenträger befestigt, an dem sich nach oben ragende Stangen 41 befinden. Am Zinkenträger 40 befinden sich zwei Stangen 41 analog zu den beiden Stangen 28 bei der Ausführungsform nach den Fig. 1 und 2. Jede Stange 41 durchgreift eine Tasche 42. Am oberen Ende jeder Tasche befindet sich eine Gelenkbohrung 43, durch die ein Gelenkbolzen 44 hindurchgesteckt ist. Der Gelenkbolzen 44 durchgreift ein Loch 45 in der Stange 41. Zur Auswahl sind weitere Löcher 46, 47 vorgesehen. Jede Tasche 42 ist an einer Verlängerung 48 des hier mit 49 bezeichneten zweiten Gestells befestigt. In der hinteren unteren Ecke der Tasche 42 befindet sich eine Anschlagfläche 50 für die Anlage der Stangen 41.

Die Ausführungsform nach Fig. 3 arbeitet wie folgt. Während der Arbeit bewirken die Bodenkräfte eine Anlage der Stangen 41 an den Anschlagflächen 50. Beim Zurückstoßen des Nachlauf-Zusatzgerätes wirken die Bodenkräfte in entgegengesetzter Richtung und die Stangen werden um die Gelenkbolzen 44 im Uhrzeigersinne verschwenkt. Nach diesem Verschwenken liegen die Zinken der hinteren Zinkenreihe 39 nur mit ihrem Eigengewicht auf dem Boden auf, so daß der Rangiervorgang nicht behindert wird. Wenn wieder in die Arbeitsstellung übergegangen wird, bewirken die Bodenkräfte das Zurückschwenken des Zusatzgerätes 37 in die Arbeitsstellung.

Bei der Ausführungsform nach Fig. 4 hat das Nachlauf-Zusatzgerät ein zweites Gestell 51, in dem wieder eine Walze 21, z.B. eine Croskill-Walze, gelagert ist. Vor der Walze 21 ist ein weiteres Zusatz-Werkzeug 52 angeordnet, das gleich ausgebildet ist, nämlich als Egge, wie das Werkzeug 37 nach Fig. 3. Auch die Aufhängung ist entsprechend ausgeführt, so daß sich auch eine gleiche Funktion ergibt, d.h. beim Zurückdrücken des zweiten Gestells 21 wird das Werkzeug 52 in Uhrzeigerrichtung verschwenkt.

Bei der Ausführungsform nach Fig. 5 ist wieder an einem zweiten Gestell 53 eine Walze 21, z.B. eine Croskill-Walze, gelagert. An hinteren Verlängerungen 54 des zweiten Gestells 53 (auch hier ist selbstverständlich an jedem seitlichen Ende des zweiten Gestelles 53 eine Verlängerung 54 angeordnet) sind zwei weitere Werkzeuge, z.B. Krümelwalzen 55, 56, angeordnet. Die Walze 55 ist an Stangen 57 gelagert, und zwar analog der Lagerung der Walze 26 an den Stangen 28 (Fig. 1, 2). Die Stangen 57 sind um Gelenke 58 schwenkbar, wobei die Arbeitsstellung durch Anschlagschrauben 59 definiert wird. Abweichend von den Fig. 1 und 2 ist an jeder Stange 57 ein Lagerarm 60 für die Krümelwalze 56 (drittes Zusatz-Werkzeug) schwenkbar angeordnet. Jeder Lagerarm 60 kann um ein Gelenk 61 schwenken und ist mittels eines Spannschlosses 62 an der Stange 57 abgestrebt. An den vorderen Enden der Lagerarme 60 ist die Krümelwalze 56 gelagert.

Die Ausführungsform nach Fig. 5 funktioniert gleich wie das Gerät nach den Fig. 1 und 2. Während des Zurückstoßens des Nachlauf-Zusatzgerätes wird die Walze 55 auf dem Boden geschleppt, während die Walze 56 verhältnismäßig weit vom Boden abgehoben ist. Die Spannschlösser 62 ermöglichen eine Veränderung der Höhenlage der Walze 56 relativ zur Walze 55 und damit eine gewünschte Einstellung des Andruckes an den Boden.

In Fig. 6 ist schematisch ein komplettes Nachlaufgerät dargestellt, das wieder eine Hauptwalze 1, vorzugsweise einer Packerwalze, aufweist. Das Gestell, in dem die Packerwalze 1 gelagert ist, ist gleich ausgebildet wie das anhand der Fig. 1 und 2 beschriebene Gestell. Das hier insgesamt mit 63 bezeichnete Nachlauf-Zusatzgerät ist mittels einer Deichsel 64 an das erste Gestell 2 angehängt. Die Deichsel 64 ist wieder mittels eines Universalgelenkes 10 mit dem ersten Gestell 2 verbunden.

Am hinteren Ende der Deichsel 64 ist ein insgesamt mit 65 bezeichnetes zweites Gestell schwenkbar gelagert. Das zweite Gestell 65 hat Seitenplatten 66, deren Querabstand voneinander etwa gleich der Breite des ersten Gestelles 2 ist. Die beiden Seitenplatten sind über in der Zeichnung nicht dargestellte Traversen miteinander verbunden. Am zweiten Gestell 65 ist eine erste Zusatzwalze 67, z.B. eine Krümelwalze, drehbar gelagert. Vor der ersten Zusatzwalze 67 ist eine zweite Zusatzwalze 68 gelagert, und zwar ebenfalls an den Seitenplatten 66. Jede Seitenplatte 66 ist mittels eines Gelenkes 69 schwenkbar mit der Deichsel 64 verbunden. Für die Begrenzung der Schwenkbewegung sind hintere Anschlagschrauben 70 und vordere Anschläge 71 vorgesehen. Jeder Seitenplatte 66 sind solche Anschläge zugeordnet. Die Anschlagschraube 70 ist in einem Ansatz 72 der Deichsel 64 verschraubbar. Sie dient zur Bestimmung der Arbeitsstellung der Walzen 67, 68 relativ zueinander. Die Anschläge 71 begrenzen die Verschwenkung der Seitenplatten 66 im Uhrzeigersinn.

Das Nachlaufgerät nach Fig. 6 arbeitet wie folgt. Bei einem Rückwärtsdruck auf die Deichsel 64 wirken auf die erste Zusatzwalze 67 Bodenkräfte ein, die die Seitenplatten 66 im Uhrzeigersinn bis zu deren Anlage am Anschlag 71 verschwenken. Hierbei wird die zweite Zusatzwalze 68 vom Boden abgehoben, so daß nur noch die Walze 67 auf dem Boden abrollt. Danach ist das Wenden des Gerätes leicht möglich.

Der wesentliche Unterschied zwischen dem Nachlaufgerät nach Fig. 6 und den Nachlaufgeräten nach den Fig. 1 bis 5 besteht darin, daß bei dem Nachlaufgerät nach Fig. 6 das gesamte zweite Gestell 65 verschwenkt wird, während bei den Ausführungsformen nach den Fig. 1 bis 5 das zweite Gestell 20, 49, 51, 53 selber nicht verschwenkt wird.

Das zweite Gestell 65 kann insgesamt gleich ausgebildet werden wie die in Fig. 5 dargestellte Anordnung, bestehend aus den Stangen 57, den Lagerarmen 60 und den Spannschlössern 62. Gegenüber Fig. 5 bleibt der wesentliche Unterschied, daß diese Anordnung dann im Zusammenhang mit der prinzipiellen Lösung nach Fig. 6 das zweite Gestell insgesamt bildet, während bei der Ausführung nach Fig. 5 die Anordnung schwenkbar am zweiten Gestell 53 gelagert ist. Durch Verstellung der Anschlagschraube 70 wird die Höhenlage der Walze 68 gegenüber der Walze 67 verändert. Dem gleichen Zweck dient die Anordnung nach Fig. 5. Wenn also diese Anordnung verwendet wird, kann auf eine Verstellbarkeit des Anschlages 70 verzichtet werden.

Ansprüche:

1. Nachlaufgerät für Drehpflüge, mit mindestens einer
vorderen Hauptwalze, insbesondere einer Packerwalze, die
in einem ersten Gestell gelagert ist und einem Nachlauf-
Zusatzgerät, das eine erste Zusatzwalze aufweist, die in
einem zweiten Gestell gelagert ist, wobei das zweite Gestell mit dem ersten Gestell mittels einer Deichsel gelenkig verbunden ist, die so geformt und angeordnet ist,
daß beim Wechseln der Arbeitsrichtung des Nachlaufgerätes die Deichsel über die Hauptwalze und das erste Gestell hinwegschwenken kann, dadurch gekennzeichnet, daß
das Nachlauf-Zusatzgerät (3) mindestens ein vor oder hinter der ersten Zusatzwalze (21) angeordnetes weiteres Zusatz-Werkzeug (26; 37; 52; 55, 56) aufweist, das am zweiten Gestell (20; 49; 51; 53) gelenkig befestigt ist und
in eine Arbeitsstellung, in der es an einem Anschlag (32;
50; 59) anliegt und in eine Rangierstellung schwenkbar
ist, in der das Zusatz-Werkzeug (26; 37; 52; 55, 56) vom
Boden abgehoben ist oder nur noch mit seinem Eigengewicht auf dem Boden aufliegt (Fig. 1 bis 5).

2. Nachlaufgerät für Drehpflüge, mit mindestens einer vorderen Hauptwalze, insbesondere einer Packerwalze, die in einem ersten Gestell gelagert ist und einem Nachlauf-Zusatzgerät, das eine erste Zusatzwalze aufweist, die in einem zweiten Gestell gelagert ist, wobei das zweite Gestell mit dem ersten Gestell mittels einer Deichsel gelenkig verbunden ist, die so geformt und angeordnet ist, daß beim Wechseln der Arbeitsrichtung des Nachlaufgerätes die Deichsel über die Hauptwalze und das erste Gestell hinwegschwenken kann, dadurch gekennzeichnet, daß das zweite Gestell (65) relativ zur Deichsel (64) um eine horizontale Achse (69) schwenkbar ist und vor der ersten Zusatzwalze (67) mindestens ein weiteres Zusatz-Werkzeug (68) angeordnet ist, wobei die Ausschwenkung des zweiten Gestells (65) nach hinten durch einen Anschlag (70) begrenzt ist und bei einer Verschwenkung des zweiten Gestells (65) nach vorn das weitere Zusatz-Werkzeug (68) angehoben wird (Fig. 6).

3. Nachlaufgerät nach einem der vorhergehenden Ansprüche, dadurch gekennzeichnet, daß mindestens ein weiteres Zusatz-Werkzeug als Walze (26; 55, 56; 68) ausgebildet ist.

4. Nachlaufgerät nach einem der Ansprüche 1 und 2, dadurch gekennzeichnet, daß mindestens ein weiteres Zusatz-Werkzeug (37; 52) als Egge ausgebildet ist.

5. Nachlaufgerät nach einem der Ansprüche 1, 3 und 4, dadurch gekennzeichnet, daß insbesondere ein Zusatz-Werkzeug (26; 55) in Form einer Walze derart schwenkbar am zweiten Gestell (20; 53) aufgehängt ist, daß in der Arbeitsstellung, auf die Fahrtrichtung bezogen, der Schwenkpunkt (29; 58) etwas vor der Drehachse (34) der Walze (26; 55) liegt.

6. Nachlaufgerät nach einem der Ansprüche 1 und 3 bis 5, dadurch gekennzeichnet, daß der Anschlag (32; 59) für die Arbeitsstellung verstellbar ist, z.B. als Anschlagschraube ausgebildet ist.

7. Nachlaufgerät nach einem der Ansprüche 1 und 3 bis 6, dadurch gekennzeichnet, daß außer dem Anschlag (32) für die Arbeitsstellung ein Anschlag (35) für die Rangierstellung vorgesehen ist.

8. Nachlaufgerät nach einem der Ansprüche 1 und 3 bis 7, dadurch gekennzeichnet, daß das weitere Zusatz-Werkzeug (26; 37; 52) höhenverstellbar am zweiten Gestell (20; 49; 51) gelagert ist, z.B. mittels am weiteren Zusatz-Werkzeug (26: 37; 52) befindlichen, nach oben ragenden Stangen (28; 41) mit Lochreihen (30, 31; 45, 46, 47), durch deren Löcher Gelenkbolzen (29; 44) durchsteckbar sind.

9. Nachlaufgerät nach einem der Ansprüche 1 und 3 bis 8, dadurch gekennzeichnet, daß an Schwenkarmen (57), die ein weiteres Zusatz-Werkzeug (55) tragen, vorzugsweise eine Walze, ein drittes Zusatz-Werkzeug (56) befestigt ist, vorzugsweise ebenfalls eine Walze, die zu der erstgenannten Walze (55) parallel ist.

10. Nachlaufgerät nach Anspruch 9, dadurch gekennzeichnet, daß das dritte Zusatz-Werkzeug (56) an Armen (60) gehalten ist, die relativ zu den Schwenkarmen (57) verschwenkbar sind und mittels längenveränderlicher Streben (62), wie Spannschlösser, gegenüber den Schwenkarmen (57) abgestützt sind.

11. Nachlaufgerät nach Anspruch 2, dadurch gekennzeichnet, daß der Anschlag (70) verstellbar ist, z.B. als Anschlagschraube ausgebildet ist.

12. Nachlaufgerät nach einem der Ansprüche 2 bis 11, gekennzeichnet durch einen weiteren Anschlag (71) für die Rangierstellung.

13. Nachlaufgerät nach einem der Ansprüche 2, 11 und 12, dadurch gekennzeichnet, daß das weitere Zusatz-Werkzeug relativ zu der ersten Zusatzwalze höhenverstellbar ist, z.B. mittels einer Anordnung nach Anspruch 10.

0201612

Fig.1

Fig.2

I

II

2/2

0201612

Fig.4

Fig.3

Fig.5

Fig.6

## Europäisches Patentamt

## EUROPÄISCHER RECHERCHENBERICHT

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| A | GB-A-2 131 263 (NIEMEYER SOHNE) | | A 01 B 49/02<br>A 01 B 29/00 |
| A | DE-A-2 001 061 (GEBR. EICHER TRAKTOREN- UND LANDMACHINENWERKE) | | |

**RECHERCHIERTE SACHGEBIETE (Int Cl 4)**

A 01 B

Der vorliegende Recherchenbericht wurde für alle Patentansprüche erstellt

| Recherchenort<br>DEN HAAG | Abschlußdatum der Recherche<br>09-01-1986 | Prüfer<br>VERDOODT S.J.M. |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82